# EUROPÄISCHE PATENTANMELDUNG

(11) **EP 4 289 666 A1**
(43) Veröffentlichungstag der Anmeldung: **13.12.2023**
(21) Anmeldenummer: 23177991.9
(22) Anmeldetag: 07.06.2023
(51) Int. Cl.: B60P 3/14, B60P 7/08, B62D 33/033, B60R 11/06, B62D 33/023, B60P 1/28

(54) **STIRNWAND-BAUGRUPPE FÜR EIN KIPPERFAHRZEUG SOWIE EIN KIPPERFAHRZEUG, UMFASSEND EINE SOLCHE STIRNWAND-BAUGRUPPE**

(30) Priorität: 10.06.2022 DE 102022114752
(71) Anmelder: Franz Xaver Meiller Fahrzeug- und Maschinenfabrik - GmbH & Co KG, 80997 München (DE)
(72) Erfinder: RIEDL, Stefan, 80638 München (DE); FUß, Andreas, 82054 München (DE)
(74) Vertreter: Weickmann & Weickmann PartmbB

(57) **Zusammenfassung**

Die vorliegende Erfindung betrifft eine Stirnwand-Baugruppe (100) für ein Kipperfahrzeug, umfassend einen unteren Wandabschnitt (110), welcher sich über die gesamte Breite der Stirnwand erstreckt und einen oberen sich im Wesentlichen horizontal erstreckenden Befestigungsabschnitt (112) umfasst, einen rechten und einen linken vertikalen Steher (120, 122), welche die Stirnwand wenigstens abschnittsweise an beiden Seiten begrenzen; und wenigstens zwei Wandelemente (130, 140), welche zwischen den vertikalen Stehern (120, 122) montierbar sind; wobei ein oberes der Wandelemente (140) einen vertikalen Wandabschnitt (142) und einen sich im Wesentlichen horizontal erstreckenden Befestigungsabschnitt (144) umfasst; wobei ein unteres der Wandelemente (130) einen vertikalen Wandabschnitt (132) und einen oberen sowie einen unteren sich im Wesentlichen horizontal erstreckenden Befestigungsabschnitt (134, 136) umfasst; und wobei das untere der Wandelemente (130) bezüglich des unteren Wandabschnitts (110) und des oberen der Wandelemente (140) in wenigstens zwei Stellungen mittels der Befestigungsabschnitte (112, 134, 136, 144) und Befestigungselementen (146) zwischen dem unteren der Wandabschnitte (130) und dem oberen der Wandelemente (140) montierbar, insbesondere anschraubbar, ist.

## Beschreibung

Die vorliegende Erfindung betrifft eine Stirnwand-Baugruppe für ein Kipperfahrzeug sowie ein Kipperfahrzeug, umfassend einen Fahrzeugkörper und einen gegenüber dem Fahrzeugkörper kippbar getragenen Kippaufbau mit einer derartigen Stirnwand-Baugruppe.

Kipperfahrzeuge werden in der Regel zum Transport von Schüttgut eingesetzt, das auf einer von Bordwänden begrenzten Ladefläche aufgenommen wird und durch ein Kippen des die Ladefläche umfassenden Kippaufbaus wieder abgeladen werden kann. Andererseits wird jedoch in der Praxis auch häufig Stückgut auf den genannten Ladeflächen transportiert, das dann entsprechend gegen ein Verrutschen zu sichern ist.

In Kipperfahrzeugen mit einem gegenüber ihrem Fahrzeugkörper nach hinten und/oder zur Seite kippbaren Kippaufbau ist eine in der Regel fest verbaute Stirnwand vorgesehen, die die Ladefläche des Kippaufbaus nach vorne begrenzt und hierüber hinaus noch weitere Aufgaben erfüllt, beispielsweise die hintere Scheibe des sich unmittelbar davor befindenden Fahrerhauses vor auf der Ladefläche aufliegenden Gegenständen zu schützen, wenn diese beispielsweise bei einem frontalen Aufprall nach vorne geschleudert werden. Hierzu sind in der Regel Lochbleche vorgesehen, die das Fahrerhaus in solchen Fällen schützen sollen, die jedoch weiterhin einen gewissen Grad an Sicht nach hinten für den in dem Fahrerhaus sitzenden Fahrer ermöglichen.

Ferner ist ebenfalls bekannt, an derartigen Stirnwänden weitere funktionale Bauelemente zu integrieren, beispielsweise ein höhenverstellbares Ablagegestell für sehr langes Ladegut, dass dann einerseits auf der Ladefläche aufliegt und beispielsweise an einer hinteren Bordwand anliegt, während es sich nach vorne über das Fahrerhaus erstreckt, indem es auf dem Ablagegestell abgestützt ist. Ferner ist bekannt, an Stirnwänden von Kipperfahrzeugen flexible Halterungen für Arbeitsmittel, insbesondere Stielgeräte wie beispielsweise Schaufeln und Besen, sowie Zurrleisten zur Befestigung bzw. dem Anzurren von auf der Ladefläche aufgenommenen und gegen ein Verrutschen zu sichernden Gegenständen, also insbesondere Stückgut, zu befestigen.

Hierbei sind die angesprochenen Arbeitsmittel oder Stielgeräte wie Schaufel und Besen in der Regel an der der Ladefläche zugewandten Innenseite der Stirnwand mitgeführt worden und es kam hierbei zu dem Zielkonflikt, einerseits die genannten Stielgeräte in diesen Bereich aufnehmen zu wollen und andererseits hier ebenfalls Schüttgut und/oder Stückgut zu transportieren bzw. zu sichern.

Ferner lässt sich sagen, dass sobald derartige Stielgeräte auf dem Bodenblech der Ladefläche aufstehen, sie in einem mit Schüttgut beladenen Zustand der Ladefläche im Bereich des Schüttguts vorliegen und einerseits die entsprechenden Stiele der Stielgeräte durch die auf sie wirkenden Hebelkräfte beschädigt werden oder gar brechen können sowie andererseits das dahinter befindliche Schüttgut nur schwer zu entfernen ist.

Zwar ist in einigen Lösungen ebenfalls vorgesehen worden, derartige Stielgeräte an der Außenseite der Stirnwand zu haltern, dies ist jedoch durch räumliche Beschränkungen nur in begrenztem Maße möglich und die Handhabung, also die Befestigung bzw. Entnahme derartiger Geräte ist aufgrund des geringen zur Verfügung stehenden Bauraums in Abhängigkeit von den Platzverhältnissen zum Fahrerhaus hin umständlich.

Ferner kann es gewünscht sein, im Bereich von Stirnwänden von Kipperfahrzeugen Planen oder Netze anzubringen, die über die Ladefläche ausgerollt und gespannt werden können, um das dort befindliche Schüttgut von oben her zu bedecken. Derartige Planen und Netze werden in einem unbenutzten Zustand aufgerollt und dementsprechend ebenfalls im Bereich der Stirnwand verstaut. Auch in diesem Fall ist die Aufnahme von Stielgeräten schwierig und ihre Beschädigung ist nicht auszuschließen. Des Weiteren ist ein Bauraum für die genannten Planen bzw. Netze in bereits bekannten Stirnwand-Baugruppen noch nicht vorgesehen und es handelt sich folglich hierbei stets um individuelle Lösungen, da in bekannten Kipperfahrzeugen keine hierfür vorgesehenen Standartvorbereitungen getroffen sind.

Angesichts der eben beschriebenen Nachteile des bekannten Stands der Technik ist es die Aufgabe der vorliegenden Erfindung, ein flexibles Ladungssicherungssystem für unterschiedliche Typen von mitzuführenden Gegenständen an Stirnwand-Baugruppen für Kipperfahrzeuge bereitzustellen, das sich durch eine individuelle Anpassbarkeit, Nachrüstbarkeit und die Möglichkeit einer einfachen Anpassung während der Lebensdauer des Kipperfahrzeugs auszeichnet.

Zu diesem Zweck umfasst die erfindungsgemäße Stirnwand-Baugruppe für ein Kipperfahrzeug einen unteren Wandabschnitt, welcher sich über die gesamte Breite der Stirnwand erstreckt und ein oberen sich im Wesentlichen horizontal erstreckenden Befestigungsabschnitt umfasst, einen rechten und einen linken vertikalen Steher, welche die Stirnwand wenigstens abschnittsweise an beiden Seiten begrenzen, und wenigstens zwei Wandelemente, welche zwischen den vertikalen Stehern montierbar sind, wobei ein oberes der Wandelemente einen vertikalen Wandabschnitt und einen sich im Wesentlichen horizontal erstreckenden Befestigungsabschnitt umfasst, wobei ein unteres der Wandelemente einen vertikalen Wandabschnitt und einen oberen sowie einen unteren sich im Wesentlichen horizontal erstreckenden Befestigungsabschnitt umfasst, und wobei das untere der Wandelemente bezüglich des unteren Wandabschnitts und des oberen der Wandelemente in wenigstens zwei Stellungen mittels der Befestigungsabschnitte und Befestigungselementen zwischen dem unteren Wandabschnitt und dem oberen der Wandelemente motierbar, insbesondere anschraubbar, ist. Hierbei wird in bevorzugten Ausführungsformen auf genau zwei derartige Wandelemente zurückgegriffen, also ein oberes und ein unteres Wandelement, es ist prinzipiell jedoch auch möglich, eine größere Anzahl davon vorzusehen, die dann dementsprechend zu montieren wären.

Durch die erfindungsgemäß geschaffene Möglichkeit, das untere dieser Wandelemente bezüglich des unteren Wandabschnitts sowie des oberen der Wandelemente in unterschiedlichen Stellungen zu montieren, wird ein flexibles Ladungssicherungssystem geschaffen, mit welchem insbesondere Stielgeräte entweder auf der Innenseite oder der Außenseite der Stirnwand-Baugruppe in einer sicheren und leicht handhabbaren Weise mitgeführt werden können, wobei flexibel ebenfalls weitere Schnittstellen zum Mitführen anderer Typen von Stückgut geschaffen werden können.

Hierbei können die wenigstens zwei Stellungen des unteren der Wandelemente eine lineare Verlagerung und/oder ein Drehen des unteren der Wandelemente umfassen, wobei hierbei durch die Befestigungsabschnitte und die Befestigungselemente die Möglichkeit geschaffen ist, das untere der Wandelemente in den angesprochenen wenigstens zwei Stellungen zu montieren. Hierbei ist insbesondere bei einem Anschrauben des unteren der Wandelemente ein einfaches erneutes Lösen dieser Verbindung und ein erneutes Befestigen in einer anderen der denkbaren Stellungen sehr einfach zu bewerkstelligen, sodass während der Lebensdauer der Stirnwand-Baugruppe die Montageposition bzw. Orientierung des unteren der Wandelemente im Wesentlichen beliebig oft anpassbar ist. Weiterhin ist durch das Vorsehen einer Verschraubung zur Montage des unteren der Wandelemente lediglich notwendig, die entsprechenden Befestigungsabschnitte mit geeigneten Mustern von Bohrungen in vorbestimmten Positionierungen zu versehen, während die Befestigungselemente durch einfache Schrauben-Muttern-Kombinationen gebildet sein können.

Ferner kann die Stirnwand-Baugruppe derart aufgebaut sein, dass der rechte und der linke vertikale Steher mittels Aufnahmeausnehmungen in den unteren Wandabschnitt eingesetzt sind und sich von diesem nach oben erstrecken. Somit ist auch an dieser Stelle eine einfache Integration der oberhalb des unteren Wandabschnitts vorgesehenen Komponenten der erfindungsgemäßen Stirnwand-Baugruppe möglich und eine Nachrüstung bzw. ein Tausch davon vereinfacht.

Unter anderen um Aufnahmeausnehmungen für die bereits mehrfach angesprochenen Stielgeräte in der erfindungsgemäßen Stirnwand-Baugruppe zu schaffen, können der vertikale Wandabschnitt und/oder wenigstens einer der horizontalen Befestigungsabschnitte des unteren und gegebenenfalls des oberen der Wandelemente mit Durchbrechungen versehen sein. Insbesondere im Bereich des oder der vertikalen Wandabschnitte vorgesehene Durchbrechungen sorgen ferner für die weiter oben bereits angesprochene bessere Sicht des Fahrers nach hinten über die Ladefläche hinweg, sofern sich der entsprechende vertikale Wandabschnitt im Bereich einer Heckscheibe des Fahrerhauses des entsprechenden Kipperfahrzeuges befindet.

Durch die in den horizontalen Befestigungsabschnitten angeordneten Durchbrechung können dementsprechend erfindungsgemäß die Stiele der angesprochenen Stielgeräte eingeführt werden, sodass diese in horizontaler Richtung fest aufgenommen sind. Dementsprechend können die Abmessungen dieser Durchbrechungen auf die üblichen Durchmesser der Stiele solcher Stielgeräte abgestimmt sein.

Um ferner Befestigungspunkte zur Lagerungssicherung an der erfindungsgemäßen Stirnwand-Baugruppe bilden zu können, kann diese ferner wenigstens eine Zurrleiste umfassen, welche an dem unteren Wandabschnitt und/oder einem der Wandelemente anbringbar, insbesondere anschraubbar, ist und einen Zurrabschnitt mit wenigstens einer Durchbrechung umfasst. Erneut bietet in diesem Zusammenhang ein Vorsehen einer Verschraubung zur Anbringung der genannten wenigstens einen Zurrleiste den Vorteil, dass hierzu lediglich geeignete Durchbrechungen oder Bohrungen in dem entsprechenden Wandabschnitt vorzusehen sind und als Befestigungselemente einfache Schrauben-Muttern-Kombinationen verwendet werden können.

Um ferner verhindern zu können, dass die in der erfindungsgemäßen Stirnwand-Baugruppe aufgenommenen Stielgeräte auf der Ladefläche selbst aufstehen müssen und demzufolge in einem Bereich vorliegen, der gegebenenfalls mit Schüttgut gefüllt wird, und/oder die Stielgeräte seitlich zu halten, kann die erfindungsgemäße Stirnwand-Baugruppe ferner wenigstens einen Stielgeräte-Halter umfassen, welcher an dem unteren Wandabschnitt und/oder einem der Wandelemente anbringbar, insbesondere anschraubbar, ist und einen Halteabschnitt zum Aufstellen eines Stiels eines Stielgeräts oder wenigstens eine Durchbrechung umfasst. Auch für derartige Stielgeräte-Halter ist aus den genannten Gründen eine Verschraubung zu ihrer Anbringung bevorzugt.

Hierbei können die Zurrleiste und/oder der Stielgerätehalter eine Breite aufweisen, welche weniger als die halbe Breite der Stirnwand beträgt, sodass diese genannten Komponenten auch in einer Weise miteinander kombinierbar sind, dass beispielsweise eine Zurrleiste an einer rechten Hälfte der Stirnwand-Baugruppe angebracht wird, während die andere Hälfte auf derselben Höhe durch den Stielgeräte-Halter eingenommen wird.

Weiterhin kann die erfindungsgemäße Stirnwand-Baugruppe eine obere Querstrebe umfassen, welche sich oberhalb des obersten der Wandelemente zwischen den beiden vertikalen Stehern erstreckt. Wie ebenfalls bereits weiter oben angedeutet, kann diese Querstrebe unter anderem als Auflage für sehr langes Ladegut dienen, das sich dementsprechend von einer Rückwand des Kipperaufbaus über die Querstrebe und von da aus über das Fahrerhaus hinaus nach vorne erstrecken kann, während sie ferner ebenfalls als Anbaupunkt für weitere Komponenten dienen kann. Hierbei kann die obere Querstrebe in einer höhenverstellbaren Weise an den beiden Stehern angebracht sein, so dass auch an dieser Stelle die Flexibilität der erfindungsgemäßen Stirnwand-Baugruppe sichergestellt wird.

Als an der oberen Querstrebe anbaubare Komponente könnte beispielsweise an eine Aufnahme-Hakenleiste gedacht werden, welche in wenigstens zwei Stellungen an der oberen Querstrebe anbringbar ist und mit wenigstens einem Paar von Haltehaken an ihrer Oberseite bereitgestellt ist. Auch das Vorsehen einer derartigen Aufnahmen-Hakenleiste ermöglicht es durch ein Einhängen von Stielgeräten an den Haltehaken, dass die an der Stirnwand-Baugruppe aufzunehmenden Stielgeräte nicht mehr bis auf die Ladefläche und damit in einen Bereich hinabragen, der gegebenenfalls von Schüttgut eingenommen werden soll.

Hierbei können die Aufnahme-Hakenleiste und die obere Querstrebe derart mit zusammenwirkenden Befestigungselementen versehen sein, dass die Aufnahme-Hakenleiste in wenigstens zwei Höhenstellungen und/oder wenigstens zwei Drehstellungen und/oder beidseitig der Querstrebe anbringbar, insbesondere anschraubbar, ist. Somit wird auch bei der Positionierung der Aufnahme-Hakenleiste eine erhöhte Flexibilität erzielt, wobei im Hinterkopf zu behalten ist, dass gegebenenfalls auch die obere Querstrebe selbst noch einmal bezüglich ihrer Höhenposition einstellbar sein kann. Dementsprechend ist auch eine Anpassung der Montageposition der Aufnahme-Hakenleiste an die entsprechende Stellung des unteren der beiden Wandelemente in einem Fall denkbar, in welchem die zu transportierenden Stielgeräte an ihrer Oberseite in der Aufnahme-Hakenleiste eingehängt sind und sich nach unten durch entsprechende Durchbrechungen in den Befestigungsabschnitten wenigstens eines der Wandelemente erstrecken.

Weiterhin kann die erfindungsgemäße Stirnwand-Baugruppe eine Rollplane umfassen, welche in wenigstens einer der Stellungen des unteren der Wandelemente derart wenigstens abschnittsweise in diesem aufgenommen ist, dass ein Abrollen der Plane über einen Kipperaufbau des Kipperfahrzeugs ermöglicht ist. Hierbei versteht es sich, dass der Begriff der Rollplane breit auszulegen ist und diese dementsprechend auch Netze oder ähnliche textile Strukturen umfassen kann. Ferner ist das Aufnehmen der Rollplane in dem Wandelement derart zu verstehen, dass durch eine geeignete Montage davon eine Tasche geschaffen wird, welche eine solche wenigstens teilweise Aufnahme der Rollplane darin in einer Draufsicht ermöglicht.

Weiterhin kann die erfindungsgemäße Stirnwand-Baugruppe zudem einen Arbeitsscheinwerfer umfassen, welcher an einem der vertikalen Steher anbringbar ist, bevorzugt in einer flexiblen Positionierung.

Gemäß einem zweiten Aspekt betrifft die vorliegende Erfindung ein Kipperfahrzeug, umfassend einen Fahrzeugkörper und einen gegenüber dem Fahrzeugkörper kippbar getragenen Kipperaufbau mit Seitenwänden, einer Rückwand sowie einer Stirnwand-Baugruppe der eben beschriebenen erfindungsgemäßen Art.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: ein erfindungsgemäßes Kipperfahrzeug in einer schematischen isometrischen Darstellung;
- Figur 2: die erfindungsgemäße Stirnwand-Baugruppe des Kipperfahrzeugs aus Figur 1 in Vorderansicht und Querschnittsansicht;
- Figur 3: schematische Darstellungen von unterschiedlichen Stellungen des unteren Wandelements der Stirnwand-Baugruppe aus Figur 2;
- Figur 4: drei Ansichten der Stirnwand-Baugruppe aus Figur 2 mit einer zusätzlichen Aufnahme-Hakenleiste;
- Figur 5: drei Ansichten der Stirnwand-Baugruppe aus Figur 4 mit dem unteren Wandelement in einer anderen Stellung;
- Figur 6: drei Ansichten der Stirnwand-Baugruppe aus den Figuren 4 und 5 mit dem unteren Wandelement in einer dritten Stellung und einer zusätzlichen Rollplane;
- Figur 7: schematische Ansichten der Aufnahme-Hakenleiste aus den Figuren 4 bis 6 in unterschiedlichen Stellungen; und
- Figur 8: zwei Ansichten der Stirnwand aus Figur 2 mit zwei zusätzlichen Stielgeräte-Haltern.

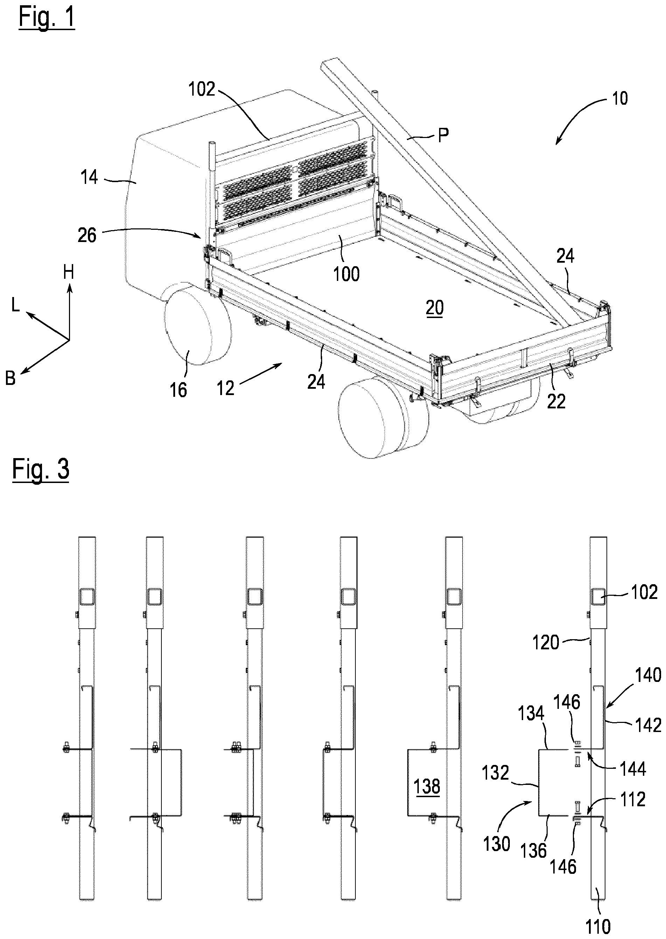

In Figur 1 ist zunächst ein erfindungsgemäßes Kipperfahrzeug in einer schematischen isometrischen Ansicht gezeigt und ganz allgemein mit dem Bezugszeichen 10 bezeichnet. Derartige Kipperfahrzeuge 10 sind im Allgemeinen aus dem Stand der Technik bekannt und umfassen übliche Komponenten wie einen Fahrzeugkörper 12 mit einer Fahrerkabine bzw. einem Führerhaus 14, in welcher/m sich ein Fahrer des Kipperfahrzeuges 10 während der Fahrt aufhält, sowie Rädern 16, mit welchen das Kipperfahrzeug 10 auf einem Untergrund aufsteht und sich fortbewegt. Ferner definiert das Kipperfahrzeug eine Längsrichtung L, eine Breitenrichtung B und eine Höhenrichtung H, welche in der folgenden Beschreibung durchgängig in dieser Art und Weise so bezeichnet werden.

Ferner umfasst das Kipperfahrzeug 10 einen gegenüber dem Fahrzeugkörper 12 kippbar getragenen Kipperaufbau 18 mit einer Ladefläche 20, wobei als mögliche Ausführungsformen derartiger Kipperfahrzeuge 10 Hinterkipper oder auch Dreiseitenkipper bekannt sind, welche den Kipperaufbau entweder nur nach hinten oder sowohl nach hinten als auch zu beiden Seiten kippen können, um auf der Ladefläche 20 aufgenommenes Schüttgut in der entsprechenden Richtung abzuladen.

Hierbei ist die Ladefläche 20 nach hinten durch eine Rückwand 22 und zu beiden Seiten durch jeweilige Seitenwände 24 begrenzt, welche je nach Bauform des Kipperfahrzeugs 10 fest an dem Kippaufbau installiert bzw. schwenkbar oder pendelbar aufgehängt sein können, um ggf. das bereits angesprochene Abladen von Schüttgut zu ermöglichen.

Nach vorne zum Führerhaus 14 hin ist die Ladefläche 20 durch eine erfindungsgemäße Stirnwand-Baugruppe 100 begrenzt, welche eine Stirnwand 26 des Kipperfahrzeugs 10 bildet und im Folgenden anhand der weiteren Figuren näher beschrieben werden wird. Es sei an dieser Stelle lediglich bereits darauf hingewiesen, dass in der in Figur 1 gezeigten Konfiguration die Stirnwand-Baugruppe 100 eine obere Querstrebe 102 in einer gegebenenfalls höhenverlagerbaren Weise umfasst, auf welcher gemäß Figur 1 ein Ladegut P aufliegt, welches an seinem einen Ende an der Rückwand 22 anliegt und sich nach vorne hin über das Führerhaus 14 erstreckt.

Es sei ebenfalls an dieser Stelle bereits darauf hingewiesen, dass die Stirnwand-Baugruppe 100 eine höhere Erstreckung in vertikaler Richtung aufweist als die die Rückwand 22 und die Seitenwände 24, was unter anderem darin begründet ist, dass sie einen Schutz des Führerhauses 14 und insbesondere einer nicht weiter dargestellten Heckscheibe davon gegenüber auf der Ladefläche aufgenommenen Lasten bieten soll, falls diese beispielsweise bei einem Unfall nach vorne geschleudert werden sollten.

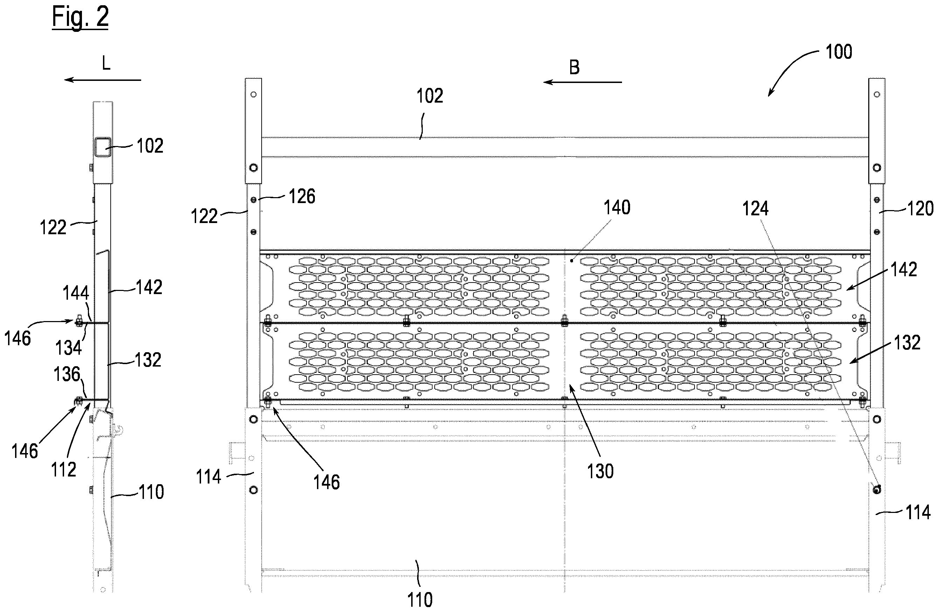

Unter Verweis auf Figur 2 ist dort nun die Stirnwand-Baugruppe aus Figur 1 in zwei Ansichten dargestellt, nämlich rechts in einer Ansicht von der Seite des Führerhauses 14 her, also entgegen der Längsrichtung L aus Figur 1 und links in einer Querschnittsansicht, also gemäß der Breitenrichtung B, wobei die Schnittebene in Breitenrichtung B des Kipperfahrzeugs 10 einer Mittelebene entspricht.

Hierbei ist in Figur 2 neben der bereits angesprochenen Querstrebe 102 weiter zu erkennen, dass die Stirnwand-Baugruppe 100 ferner einen unteren Wandabschnitt 110 umfasst, welcher sich über die gesamte Breite der Stirnwand 26 erstreckt, von seiner Bauform und Höhe vergleichbar mit den Seitenwänden 24 bzw. der Rückwand 22 ist, und welcher einen oberen sich im Wesentlichen in Längsrichtung L horizontal erstreckenden Befestigungsabschnitt 112 aufweist. Ferner weist der untere Wandabschnitt 110 zudem an seinen rechten und linken Rändern jeweilige Aufnahmeausnehmungen 114 auf, in welchen ein rechter und ein linker Steher 120 und 122 eingesetzt sind und sich von diesem nach oben erstrecken. Hierbei ist zu erkennen, dass die Befestigung der beiden Steher 120 und 122 in verschiedene Höhenpositionen möglich ist, wozu jeweilige Durchbrechungen 124 zum Anschrauben der Steher 120 und 122 in den Aufnahmeausnehmungen 114 vorgesehen sind, und dass andererseits die Steher 120 und 122 selbst wiederum im Bereich ihrer oberen Enden mehrere Paare von Durchbrechungen 126 aufweisen, welche wiederum eine Montage der oberen Querstrebe 102 in unterschiedlichen Höhenpositionen ermöglichen.

Weiter umfasst die Stirnwand-Baugruppe 100 ein unteres Wandelement 130 und ein oberes Wandelement 140, welche jeweils derart montiert sind, dass sie sich in Breitenrichtung zwischen den vertikalen Stehern 120, 122 erstrecken. Hierbei weisen die beiden Wandelemente 130 und 140 jeweilige vertikale Wandabschnitte 132 und 142 auf, welche mit Durchbrechungen versehen sind, welche einem Fahrer des Kipperfahrzeugs bei einer Fahrt davon eine Sicht nach hinten durch die Heckscheibe des Fahrerhauses 14 ermöglichen, wie sich anhand Figur 1 nachvollziehen lässt.

Des Weiteren ist insbesondere in der links dargestellten Querschnittsansicht in Figur 2 zu erkennen, dass das untere Wandelement 130 ferner neben dem vertikalen Wandabschnitt 132 einen oberen sowie einen unteren sich im Wesentlichen horizontal erstreckenden Befestigungsabschnitt 134 und 136 umfasst, während das obere Wandelement 140 neben dem vertikalen Wandabschnitt 142 an seiner Unterseite in ähnlicher Weise einen sich im Wesentlichen horizontal erstreckenden Befestigungsabschnitt 144 umfasst. Wie ebenfalls in der Schnittansicht aus Figur 2 links nachzuvollziehen ist, sind im Bereich der Paare von Befestigungsabschnitten 112 und 136 bzw. 134 und 144 jeweilige Verschraubungen 146 vorgesehen, mittels welcher die Montage der Wandelemente 130 und 140 bezüglich des fest an der Ladfläche 20 angebrachten unteren Wandabschnitts 110 bewerkstelligt ist. Insbesondere das obere Wandelement 140 kann ferner ebenfalls zusätzlich noch an den rechten und linken Stehern 120, 122 montiert sein, dies ist jedoch in der Figur 2 so nicht dargestellt.

Indem nun an den horizontalen Befestigungsabschnitten 112, 134, 136 und 144 jeweilige in Längsrichtung L verlaufende Reihen von Durchbrechungen zur Aufnahme der Verschraubungen 146 vorgesehen sind, ist eine Montage des unteren Wandelements 130 in einer Mehrzahl von Stellungen bezüglich des unteren Wandabschnitts 110 sowie des oberen Wandelements 140 denkbar, wie sich insbesondere aus den Darstellungen aus Figur 3 nachvollziehen lässt, die insgesamt fünf mögliche derartige Stellungen sowie zuletzt eine Explosionsdarstellung der entsprechenden Komponenten zeigt. Hierbei ist aus Gründen nur die genannte Explosionsdarstellung mit Bezugszeichen versehen, es sind jedoch in allen Ansichten dieselben Komponenten dargestellt.

Hierbei entspricht die ganz links dargestellte Stellung derjenigen aus Figur 2, in welcher die vertikalen Wandabschnitte 132 und 142 der beiden Wandelemente 130 und 140 im Wesentlichen fluchtend miteinander ausgerichtet sind, während in der zweiten und der dritten in Figur 3 gezeigten Stellung eine Verlagerung des unteren Wandelements 130 und insbesondere seines vertikalen Wandabschnitts 132 in Richtung der Ladefläche 20 bzw. des Führerhauses 14 gemäß der Längsrichtung L des Kipperfahrzeuges 10 vorgesehen ist.

In der vierten und der fünften Stellung wurde das untere Wandelement 130 ferner um 180° gedreht, sodass sein vertikaler Wandabschnitt 132 nunmehr in Richtung des Führerhauses 14 des Kipperfahrzeugs 10 orientiert ist und eine Tasche 138 mit variablem Volumen zwischen der vierten und fünften Stellung entsteht. Zudem zeigt die Ansicht ganz rechts die bereits angesprochene Explosionsdarstellung der relevanten Komponenten der erfindungsgemäßen Stirnwand-Baugruppe 100, wobei hier zu erkennen ist, dass die Verschraubung 146 jeweilige Schrauben-Muttern-Kombinationen sowie Unterlegscheiben umfasst. Demzufolge ist ein Wechsel zwischen den gezeigten Stellungen in einfacher Weise durch ein Aufschrauben der Verschraubung 146 und ein horizontales Verlagern und/oder Drehen um 180° des unteren Wandelements 130 ohne großen Aufwand möglich.

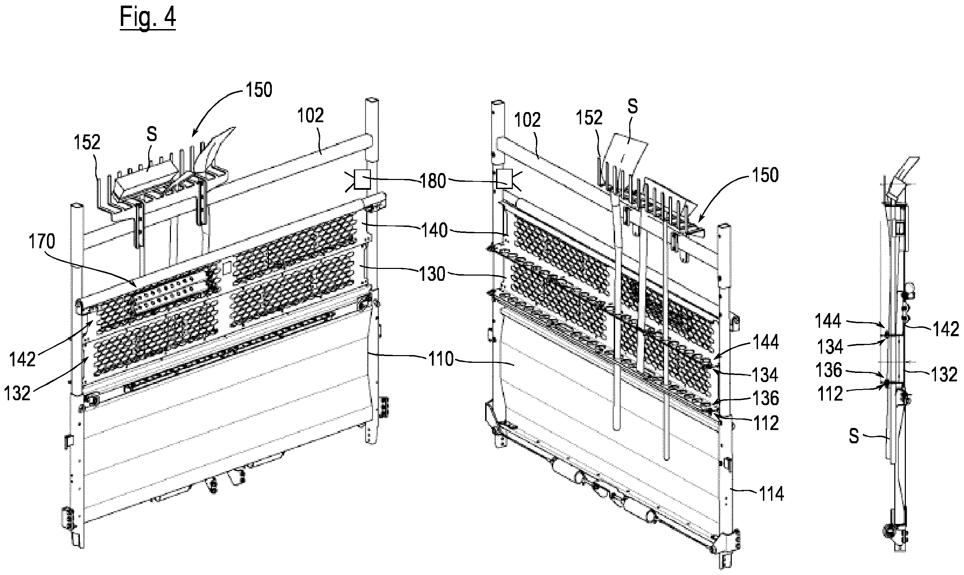

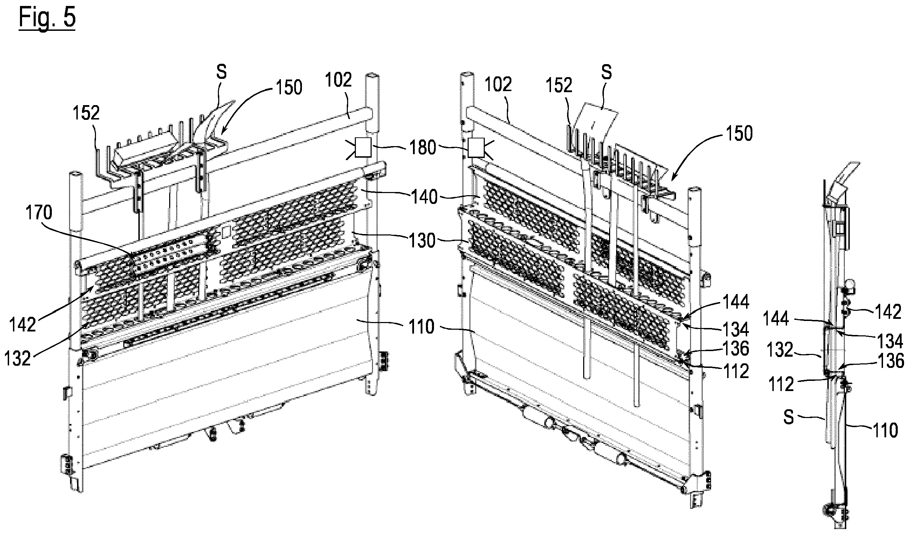

In den Figuren 4 und 5 sind nun jeweils drei Ansichten der erfindungsgemäßen Stirnwand-Baugruppe 100 gezeigt, nämlich eine isometrische Ansicht von der Seite der Lagefläche 20 aus, eine isometrische Ansicht von der Seite des Fahrerhauses 14 aus und eine Schnittansicht entlang der Breitenrichtung B, wobei sich in Figur 4 das untere Wandelement 130 in der Stellung aus Figur 3 ganz links befindet, während es in Figur 5 gemäß der vierten Stellung aus Figur 3 montiert ist.

In beiden Figuren 4 und 5 ist ferner an der oberen Querstrebe 102 eine jeweilige Aufnahme-Hakenleiste 150 angebracht, welche an ihrer jeweiligen Oberseite mit mehreren Haltehaken 152 versehen ist, welche sich derart nach oben erstrecken, dass hieran die in den Figuren 4 und 5 gezeigten Stielgeräte S in Form von Schaufeln und Besen einhängbar sind. Hierbei sei darauf hingewiesen, dass in beiden Figuren 4 und 5 zum ersten Mal zu erkennen ist, dass neben den vertikalen Wandabschnitten 132 und 142 der beiden Wandelemente 130 und 140 auch die jeweiligen Befestigungsabschnitte 112, 134, 136 und 144 nicht nur mit Durchbrechungen für die Verschraubung 146 versehen sind, sondern auch noch mit jeweiligen Durchbrechungen, welche das Hindurchstecken der Stiele der Stielgeräte S ermöglichen.

Somit erstrecken sich diese Stielgeräte S von ihrer Oberseite, an welcher sie in den Haltehaken 152 der Aufnahme-Hakenleiste 150 eingehängt sind, nach unten durch die Durchbrechungen der jeweiligen Paare von Befestigungsabschnitten 134, 144 bzw. 112, 136, reichen jedoch nicht bis zu der Ladefläche 20 des Kipperaufbaus 18 des Flurförderzeugs 10 hinunter. Somit kann verhindert werden, dass die Stielgeräte S zwischen auf der Ladefläche 20 aufgenommenem Schüttgut eingeklemmt und durch dieses beschädigt werden, bzw. dass dieses Schüttgut hinter den Stielen der Stielgeräte S zu liegen kommt und gegebenenfalls dort verklemmt wird. Wie sich aus den Figuren 4 und 5 dementsprechend ergibt, sind die beiden gezeigten Stellungen des unteren Wandelements 130 für eine entsprechende Aufnahme der Stielgeräte S geeignet und es ist auch keine Anpassung der relativen Anbauposition der Aufnahme-Hakenleiste 150 an der oberen Querstrebe 102 notwendig.

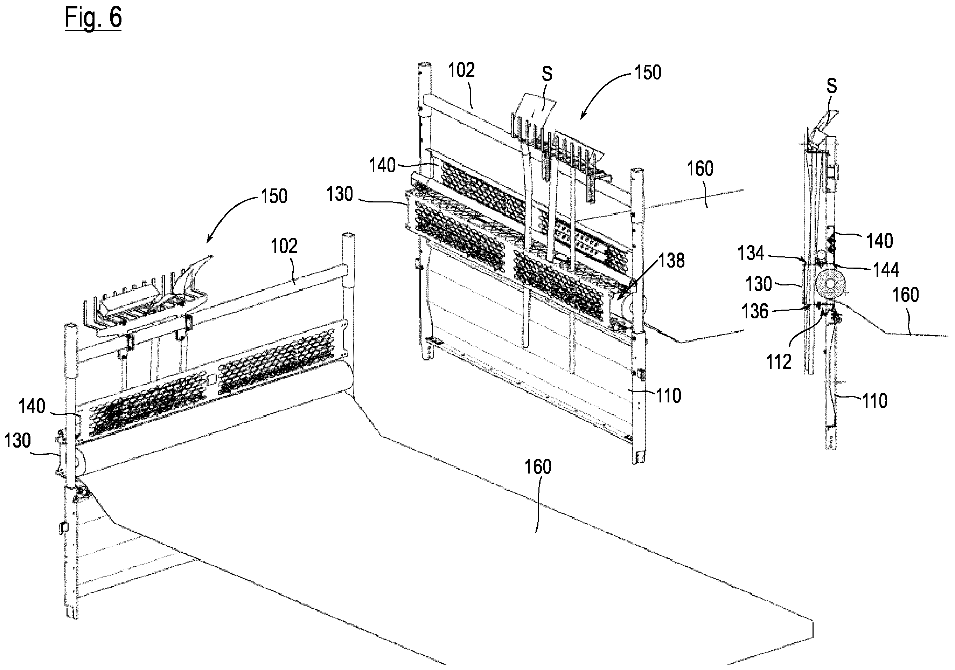

Dem hingegen ist in Figur 6 eine Konfiguration gezeigt, in welcher das untere Wandelement 130 gemäß der fünften Stellung aus Figur 3 montiert ist und sich somit der vertikale Wandabschnitt 132 davon soweit wie möglich zu der Fahrerkabine 14 des Kipperfahrzeugs 10 erstreckt und demzufolge eine maximal große Aufnahmetasche 138 gebildet ist.

In dieser Aufnahmetasche 138 ist nun eine Rollplane 160 in einer rotierbaren Weise integriert, die ein Abrollen über die Ladefläche 20 entlang der Seitenwände 24 bis hin zu der Rückwand 22 des Kipperaufbaus 18 ermöglicht. Demzufolge ist durch die Möglichkeit, die Rollplane 160 im aufgerollten Zustand in der Tasche 138 aufzunehmen eine optimale Anbauposition für eine derartige Rollplane 160 geschaffen.

Ferner sei darauf hingewiesen, dass auch in der in Figur 6 gezeigten Stellung des unteren Wandelements 130 das Aufnehmen von Stielgeräten S in ähnlicher Weise wie in Figur 4 und 5 gezeigt möglich ist, hierzu jedoch die Aufnahme-Hakenleiste 150 in einer derartigen Weise montiert ist, dass sie mit ihren Haltehaken 152 ebenfalls näher zu dem Führerhaus 14 des Kipperfahrzeugs 10 angeordnet ist.

Hierbei erstrecken sich dementsprechend die Stiele der Stielgeräte S auch nur durch die Durchbrechungen in den horizontalen Befestigungsabschnitten 134 und 136 des unteren Wandelements 130 und nicht durch die entsprechenden Befestigungsabschnitte 112 des unteren Wandabschnitts 110 sowie 144 des oberen Wandelements 140, da in deren Bereich bereits die Rollplane 160 vorliegt. Dennoch ist auch in einer solchen Konfiguration die Mitnahme der gezeigten Stielelemente S in gleicher Weise problemlos möglich.

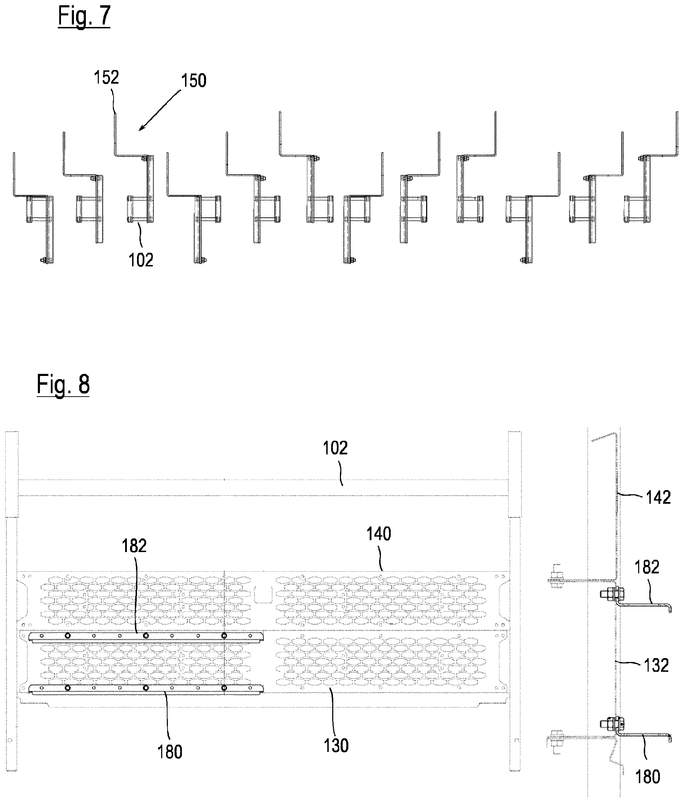

Um nun zu verdeutlichen, wie auch die Aufnahme-Hakenleiste in unterschiedlichen Stellungen an der oberen Querstrebe 102 montierbar ist, sei ferner auf die Figur 7 verwiesen, welche insgesamt 12 mögliche Stellungen der Aufnahme-Hakenleiste 150 bezüglich der oberen Querstrebe 102 zeigt, wobei aus Gründen der Übersichtlichkeit nur eine der Darstellungen mit Bezugszeichen versehen ist, während jedoch selbstverständlich in den anderen Darstellungen dieselben Komponenten gezeigt sind. Hierbei ist jeweils eine Montage der Aufnahme-Hakenleiste 150 in drei verschiedenen Höhenpositionen mittels entsprechender Verschraubungen 154 möglich, wobei ferner eine jeweilige Montage an der Seite des Führerhauses 14 bzw. der Ladefläche 20 der oberen Querstrebe 102 ermöglicht ist und ferner jeweils auch noch ein Drehen der Aufnahme-Hakenleiste um 180°. Somit ergeben sich insgesamt 3 x 2 x 2 = 12 unterschiedliche Stellungen für die Aufnahme-Hakenleiste 150, was für eine hervorragende Flexibilität insbesondere im Zusammenhang mit den ebenfalls denkbaren Stellungen des unteren Wandelements 130, sowie der Höhenverstellbarkeit der oberen Querstrebe 102 sorgt.

Weiterhin sei rückblickend auch noch darauf verwiesen, dass in den Figuren 4 und 5 jeweilige Zurrleisten 170 gezeigt sind, welche mittels geeigneter Durchbrechungen und Verschraubungen an jeweils dem oberen Wandelement 140 befestigt sind und mittels Zurrabschnitten mit entsprechenden Durchbrechungen Anbindungspunkte zum Sichern von auf der Ladefläche 20 aufgenommener Ladung bilden können. Ferner sind in den Figuren 4 und 5 ebenfalls jeweilige Arbeitsscheinwerfer 190 gezeigt, welche an dem jeweils rechten Steher 120 in variabler Position anbringbar sind und beispielsweise die Ladefläche 20 beleuchten können.

Zuletzt sei auch noch auf Figur 8 verwiesen, welche die Anbringung von zusätzlichen Stielgeräte-Haltern 180 und 182 an dem unteren Wandelement 130 zeigt. Derartige Stielgeräte-Halter 180, 182 können eine Auflage für die Stiele von Stielgeräten S bilden oder auch nur eine seitliche Halterung davon in gleicher Weise wie die Durchbrechungen der oberen und unteren Wandelemente in den Figuren 4 und 5. Hierbei kann in Figur 8 demzufolge der untere Stielgeräte-Halter 180 lediglich einen Auflagebereich zum Tragen des entsprechenden Stiels umfassen, wodurch ein vorbestimmter Abstand davon zu der Ladefläche 20 eingehalten wird, während der obere Stielgeräte-Halter wiederum wenigstens eine Durchbrechung aufweisen kann, durch die der Stiel eines aufzunehmenden Stielgeräts hindurchgesteckt werden kann. Demzufolge bilden die gezeigten Stielgeräte-Halter 180 und 182 eine weitere Anbauoption zur Mitnahme derartiger Geräte auf dem Kipperfahrzeug 10.

## Patentansprüche

1. Stirnwand-Baugruppe (100) für ein Kipperfahrzeug (10), umfassend:
- einen unteren Wandabschnitt (110), welcher sich über die gesamte Breite der Stirnwand (26) erstreckt und einen oberen sich im Wesentlichen horizontal erstreckenden Befestigungsabschnitt (112) umfasst;
- einen rechten und einen linken vertikalen Steher (120, 122), welche die Stirnwand (26) wenigstens abschnittsweise an beiden Seiten begrenzen; und
- wenigstens zwei Wandelemente (130, 140), welche zwischen den vertikalen Stehern (120, 122) montierbar sind;
wobei ein oberes der Wandelemente (140) einen vertikalen Wandabschnitt (142) und einen sich im Wesentlichen horizontal erstreckenden Befestigungsabschnitt (144) umfasst;
wobei ein unteres der Wandelemente (130) einen vertikalen Wandabschnitt (132) und einen oberen sowie einen unteren sich im Wesentlichen horizontal erstreckenden Befestigungsabschnitt (134, 136) umfasst; und
wobei das untere der Wandelemente (130) bezüglich des unteren Wandabschnitts (110) und des oberen der Wandelemente (140) in wenigstens zwei Stellungen mittels der Befestigungsabschnitte (112, 134, 136, 144) und Befestigungselementen (146) zwischen dem unteren der Wandabschnitte (130) und dem oberen der Wandelemente (140) montierbar, insbesondere anschraubbar, ist.

2. Stirnwand-Baugruppe (100) nach Anspruch 1,
wobei die wenigstens zwei Stellungen eine lineare Verlagerung und/oder ein Drehen des unteren der Wandelemente (130) umfassen.

3. Stirnwand-Baugruppe (100) nach einem der vorhergehenden Ansprüche, wobei der rechte und der linke vertikale Steher (120, 122) mittels Aufnahmeausnehmungen (114) in dem unteren Wandabschnitt (110) eingesetzt sind und sich von diesem nach oben erstrecken.

4. Stirnwand-Baugruppe (100) nach einem der vorhergehenden Ansprüche, wobei der vertikale Wandabschnitt (132, 142) und/oder wenigstens einer der horizontalen Befestigungsabschnitte (134, 136, 144) des unteren und ggf. des oberen der Wandelemente (130, 140) mit Durchbrechungen versehen ist.

5. Stirnwand-Baugruppe (100) nach einem der vorhergehenden Ansprüche, ferner umfassend wenigstens eine Zurrleiste (170), welche an dem unteren Wandabschnitt (110) und/oder einem der Wandelemente (130, 140) anbringbar, insbesondere anschraubbar, ist und einen Zurrabschnitt mit wenigstens einer Durchbrechung umfasst.

6. Stirnwand-Baugruppe (100) nach einem der vorhergehenden Ansprüche, ferner umfassend wenigstens ein Stielgeräte-Halter (180, 182), welcher an dem unteren Wandabschnitt (110) und/oder einem der Wandelemente (130, 140) anbringbar, insbesondere anschraubbar, ist und einen Halteabschnitt zum Aufstellen eines Stiels eines Stielgeräts (S) oder wenigstens eine Durchbrechung umfasst.

7. Stirnwand-Baugruppe (100) nach einem der Ansprüche 5 und 6,
wobei die Zurrleiste (170) und/oder der Stielgeräte-Halter (180) eine Breite aufweist, welche weniger als die halbe Breite der Stirnwand (26) beträgt.

8. Stirnwand-Baugruppe (100) nach einem der vorhergehenden Ansprüche, ferner umfassend eine obere Querstrebe (102), welche sich oberhalb des oberen der Wandelemente (140) zwischen den beiden vertikalen Stehern (120, 122) erstreckt.

9. Stirnwand-Baugruppe (100) nach dem vorhergehenden Ansprüche, ferner umfassend eine Aufnahme-Hakenleiste (150), welche in wenigstens zwei Stellungen an der oberen Querstrebe (102) anbringbar und mit wenigstens einem Paar von Haltehaken (152) an ihrer Oberseite bereitgestellt ist.

10. Stirnwand-Baugruppe (100) nach dem vorhergehenden Anspruch, wobei die Aufnahme-Hakenleiste (150) und die obere Querstrebe (102) derart mit zusammenwirkenden Befestigungselementen versehen sind, dass die Aufnahme-Hakenleiste (150) in wenigstens zwei Höhenstellungen und/oder wenigstens zwei Drehstellungen und/oder beidseitig der Querstrebe (102) anbringbar, insbesondere anschraubbar ist.

11. Stirnwand-Baugruppe (100) nach einem der vorhergehenden Ansprüche, ferner umfassend eine Rollplane (160), welche in wenigstens einer der Stellungen des unteren der Wandelemente (130) derart wenigstens abschnittsweise in diesem aufgenommen ist, dass ein Abrollen der Plane (160) über einen Kipperaufbau (18) des Kipperfahrzeugs (10) ermöglicht ist.

12. Stirnwand-Baugruppe (100) nach einem der vorhergehenden Ansprüche, ferner umfassend einen Arbeitsscheinwerfer (190), welcher an einem der vertikalen Steher (120, 122) anbringbar ist.

13. Kipperfahrzeug (10), umfassend:
- einen Fahrzeugkörper (12); und
- einen gegenüber dem Fahrzeugkörper (12) kippbar getragenen Kipperaufbau (18) mit Seitenwänden (24), einer Rückwand (22) sowie einer Stirnwand-Baugruppe (100) nach einem der vorhergehenden Ansprüche.
